# EUROPÄISCHE PATENTSCHRIFT

(11) **EP 3 488 972 B1**
(45) Veröffentlichungstag und Bekanntmachung des Hinweises auf die Patenterteilung: **11.05.2022**
(21) Anmeldenummer: 17202973.8
(22) Anmeldetag: 22.11.2017
(51) Int. Cl.: B25B 5/16, B23Q 1/52, B25J 17/02

(54) **SCHWENKVORRICHTUNG**
PIVOTING DEVICE
DISPOSITIF DE PIVOTEMENT

(43) Veröffentlichungstag der Anmeldung: 29.05.2019
(73) Patentinhaber: UNIVER S.p.A., 20128 Milano (IT)
(72) Erfinder: Migliori, Luciano, 20124 Milano (IT)
(74) Vertreter: Franke, Markus

(56) Entgegenhaltungen:
- DE-U1- 20 214 887
- DE-U1-202011 004 164
- DE-U1-202012 013 049
- US-A1- 2002 153 650
- Jennifer Calhoon: "DE-STA-CO Electric Pivot Unit Offers Advantages https Home > Design World Articles > DE-STA-CO Electric Pivot Unit Offers Advantages DE-STA-CO Electric Pivot Unit Offers Advantages", , 20. Juli 2014 (2014-07-20), XP055476908, Gefunden im Internet: URL:https://web.archive.org/web/2014072000 3208/https://www.designworldonline.com/de- sta-co-electric-pivot-unit-offers-advantag es/ [gefunden am 2018-05-18]

## Beschreibung

Die Erfindung betrifft eine Schwenkvorrichtung gemäß Oberbegriff des Anspruchs 1. Eine solche ist aus DE202010013049U1 bekannt.

Derartige Schwenkvorrichtungen finden insbesondere im Karosseriebau der Kfz-Industrie Verwendung. Bei diesen sind die Antriebe unterschiedlich gestaltet und hierbei insbesondere pneumatisch oder elektrisch wirkend ausgebildet. Mit der Aufnahme, die im Schwenkelement gelagert und mit diesem verbunden ist, ist insbesondere ein Werkzeug verbindbar, um mittels dessen die Funktion einer Spannvorrichtung, einer Schweißzange, eines Prägewerkzeugs, eines Clinchwerkzeugs oder eines Stiftziehzylinders zu vollführen.

Eine Schwenkvorrichtung ist aus der WO 2013/104355 A2 bekannt. Diese weist ein Schwenkelement auf, das als Schwenkarm ausgebildet ist, der aus zwei Armteilen besteht, die in unterschiedlichen Positionen fest miteinander verbindbar ausgebildet sind. Dabei weisen die Armteile jeweils ein in unterschiedlichen Positionen mindestens teilweise zueinander fluchtendes Lochmuster mit Durchgangs- und Gewindebohrungen auf und sind mit Schrauben miteinander verbunden ausgebildet. Bei dieser Schwenkvorrichtung sind zwei gleich ausgerichtete, somit in derselben Winkellage angeordnete Schwenkarme vorgesehen. Die Aufnahme, die als Aufnahmeplatte ausgebildet ist, ist fest, aber lösbar mit den beiden Schwenkarmen verbunden und weist ein Lochmuster zur Befestigung von verschwenkbaren Vorrichtungen, somit von in der Aufnahmeplatte zu lagernden Werkzeugen auf. Die Zweiteiligkeit des jeweiligen Schwenkarms hat den Vorteil, dass die Aufnahmeplatte, je nach Anwendungsfall, in unterschiedlichen Winkelstellungen anordenbar ist. Die jeweiligen Lochmuster bilden dabei ein Aufnahmeprofil des einen Armteils und ein korrespondierendes Gegenprofil des anderen Armteils. Eine Vorratshaltung unterschiedlicher Schwenkarme mit unterschiedlich daran angeordneten Aufnahmeplatten kann somit entfallen. Allerdings ist der Schwenkarm aufwendig gestaltet, da er zweiteilig ist und die beiden den Schwenkarm bildenden Armteile mit den Lochmustern zu versehen sind.

Des Weiteren ist aus der US 2002/153650 A1 eine Schwenkvorrichtung bekannt, welche ebenfalls die Merkmale des Oberbegriffs des Patentanspruchs 1 aufweist. Die Schwenkvorrichtung weist zwei Schwenkarme und eine Aufnahme auf, welche fest aber lösbar mit den beiden Schwenkarmen verbunden ist.

Eine Schwenkvorrichtung ist ferner aus der WO 03/047815 A1 bekannt. Bei dieser ist über einen Elektromotor ein Schneckengetriebe antreibbar. Das Schneckenrad des Schneckengetriebes wirkt mit einem Kniehebel zusammen, der seinerseits mit einer aus dem Gehäuse der Schwenkvorrichtung herausgeführten Ausgangswellezusammenwirkt, die drehfest mit einem Schwenkelement verbunden ist. Durch Drehrichtungsumkehr des Elektromotors lässt sich das Schwenkelement hin und her verschwenken. Der Elektromotor ist als Wechselstrom- oder Drehstrommotor ausgebildet.

Aufgabe der vorliegenden Erfindung ist es, bei der Schwenkvorrichtung der eingangs genannten Art, auf baulich besonders einfache Art, eine unterschiedliche Winkelanordnung der Aufnahme zu gewährleisten.

Gelöst wird die Aufgabe durch eine Schwenkvorrichtung, die gemäß den Merkmalen des Patentanspruchs 1 ausgebildet ist.

Bei der Schwenkvorrichtung ist vorgesehen, dass das Schwenkelement ein Aufnahmeprofil für die Aufnahme und die Aufnahme ein Gegenprofil, das mit dem Aufnahmeprofil korrespondiert, aufweist, wobei das Aufnahmeprofil und das Gegenprofil derart gestaltet sind, dass diese Profile in unterschiedlichen Stellungen von Aufnahme und Schwenkelement zueinander anordenbar sind.

Bei der Schwenkvorrichtung ist es somit nicht erforderlich, das jeweilige Schwenkelement mehrteilig zu gestalten. Es ist vorzugsweise einteilig gestaltet, insbesondere als einteiliger Schwenkarm ausgebildet, und aufgrund der besonderen Ausbildung mit dem Aufnahmeprofil geeignet, die Aufnahme im Bereich deren Gegenprofils aufzunehmen. Die Möglichkeit, das Aufnahmeprofil in unterschiedlichen Stellungen bezüglich des Schwenkelements anzuordnen und mit diesem zu verbinden, erlaubt es, unterschiedliche Positionen des jeweiligen mit der Aufnahme zu verbindenen Werkzeugs oder zu einer weiteren mit der Schwenkvorrichtung im Bereich deren Aufnahme zu verbindenden anderen Schwenkvorrichtung darzustellen. Diese andere Schwenkvorrichtung kann dann entsprechend der ersten Vorrichtung ausgebildet sein und eine Aufnahme für ein Werkzeug aufweisen.

Die Aufnahme ist vorzugsweise als Aufnahmeplatte ausgebildet. Eine solche Aufnahmeplatte weist beidseitig besonders große Aufnahmeflächen auf, um einerseits die Aufnahme an dem Schwenkelement abzustützen und die Aufnahme mit diesem Schwenkelement zu verbinden, andererseits ein Werkzeug oder eine weitere Schwenkvorrichtung mit der Aufnahme zu verbinden.

Grundsätzlich kann die Aufnahme in einem einzigen Schwenkelement gelagert werden. Um die Kippstabilität der Aufnahme zu erhöhen, wird es aber als besonders vorteilhaft angesehen, wenn die Aufnahme in dem Schwenkelement und einem weiteren Schwenkelement gelagert und mit diesen beiden Schwenkelementen verbunden ist. Hierbei weisen beiden Schwenkelemente insbesondere dasselbe Aufnahmeprofil für die Aufnahme auf.

Gemäß einer vorteilhaften Gestaltung bilden die beiden Schwenkelemente Bestandteil einer gemeinsamen Schwenkelementeinheit, wobei die Schwenkelementeinheit drehfest mit der Ausgangswelle verbunden ist. Bei dieser Schwenkelementeinheit sind die beiden Schwenkelemente insbesondere gabelförmig angeordnet. Im Bereich eines aus dem Gehäuse herausgeführten Endes der Ausgangswelle ist somit die Schwenkelementeinheit mit der Ausgangswelle drehfest verbunden.

Gemäß einer anderen vorteilhaften Gestaltung ist vorgesehen, dass die beiden Schwenkelemente separate Bauteile bilden, wobei die Ausgangswelle beidseitig des Gehäuses aus diesem herausgeführt ist und mit dem jeweils aus dem Gehäuse herausgeführten Bereich der Ausgangswelle eines der Schwenkelemente drehfest verbunden ist, bei gleicher Winkelausrichtung der beiden Schwenkelemente. Bei dieser Gestaltung sind die beiden Schwenkelemente aufgrund der beidseitig des Gehäuses erfolgenden Anordnung bereits in einem relativ großen Abstand zueinander angeordnet, sodass die Aufnahme, insbesondere die Aufnahmeplatte diese beiden Schwenkelemente in relativ großem Abstand zueinander verbindet. Somit ist bei dieser Gestaltung die relativ große Aufnahmeplatte besonders gut geeignet, ein relativ schweres Werkzeug aufzunehmen oder aber eine weitere Schwenkvorrichtung, die ihrerseits mit einem Werkzeug bestückt ist.

Eine baulich besonders einfache Gestaltung des jeweiligen Schwenkelements ergibt sich, wenn dieses als Schwenkarm ausgebildet ist. Es ist somit nur erforderlich, das jeweilige Schwenkelement als relativ einfach gestaltete Struktur auszubilden, die im Bereich des einen Endes drehfest mit der Ausgangswelle verbunden ist und im Bereich des anderen Endes die Aufnahme bzw. Aufnahmeplatte aufnimmt.

Besonders einfach lässt sich die Aufnahme mit dem jeweiligen Schwenkelement verbinden, wenn dies mittels Schrauben erfolgt. Dies ermöglicht eine einfache und unkomplizierte Montage als auch Demontage der Aufnahme bezüglich des Schwenkelements.

Bei der Erfindung ist vorgesehen, dass die Aufnahme einen zentralen Abschnitt in einer ersten Ebene sowie zwei auf abgewandten Seiten dieses Abschnitts angeordnete seitliche Abschnitte, deren Ebenen unter identischen Winkeln zur ersten Ebene angeordnet sind, aufweist. Dabei ist ferner vorgesehen, dass das jeweilige Schwenkelement einen zentralen Abschnitt und zwei innere seitliche Abschnitte, aufweist, wobei diese inneren seitlichen Abschnitte entsprechend den seitlichen Abschnitten der Aufnahme ausgeführt und angeordnet sind. Schließlich ist vorgesehen, dass das jeweilige Schwenkelement zwei äußere seitliche Abschnitte aufweist, die auf dem zentralen Abschnitt des jeweiligen Schwenkelements abgewandten Seiten der beiden inneren seitlichen Abschnitte angeordnet sind, wobei Ebenen der beiden äußeren seitlichen Abschnitte unter identischen Winkeln zu den Ebenen der inneren seitlichen Abschnitte angeordnet sind, wobei diese Winkel den Winkeln der Ebenen zwischen den inneren seitlichen Abschnitten und dem zentralen Abschnitt des jeweiligen Schwenkelements entsprechen.

In der Aufnahme sind somit zwei definiert zueinander angeordnete Ebenen gebildet. In dem Schwenkelement sind fünf definiert zueinander angeordnete Ebenen gebildet. Die jeweiligen Ebenen von Aufnahme, die jeweiligen Ebenen von Schwenkelement und auch die jeweiligen Ebenen von Aufnahme einerseits und Schwenkelement andererseits sind definiert zueinander angeordnet, sodass immer die beiden Ebenen der Aufnahme mit zwei der fünf Ebenen des Schwenkelements im Kontakt sind, unabhängig von der gewählten der drei möglichen relativen Schwenkstellungen von Aufnahme bezüglich des Schwenkelements. In einer Stellung liegt die Aufnahme mit deren beiden seitlichen Abschnitten an den beiden inneren seitlichen Abschnitten des Schwenkelements an. In der jeweiligen weiteren der beiden anderen Stellungen liegt der eine seitliche Abschnitt der Aufnahme am zentralen Abschnitt des Schwenkelements und der andere seitliche Abschnitt der Aufnahme am äußeren seitlichen Abschnitt des Schwenkelements an.

Bezüglich der Winkellage der Abschnitte zueinander wird es als besonders vorteilhaft angesehen, wenn bei der Aufnahme deren seitliche Abschnitte bezüglich deren Ebenen einen Winkel von 30° bis 45°, insbesondere von 45° mit der Ebene des zentralen Abschnitts der Aufnahme einschließen, ferner bei dem jeweiligen Schwenkelement deren innere seitliche Abschnitte bezüglich deren Ebenen einen Winkel von 30° bis 45°, insbesondere von 45° mit der Ebene des zentralen Abschnitts des jeweiligen Schwenkelements einschließen, ferner bei dem jeweiligen Schwenkelement deren äußere seitliche Abschnitte bezüglich deren Ebenen einen Winkel von 30° bis 45°, insbesondere von 45° mit der Ebene des zugewandten inneren seitlichen Abschnitts einschließen.

Bei dem genannten Winkel von 30° lassen sich somit drei unterschiedliche Winkelpositionen von Aufnahme und Schwenkelement einstellen, die einen Gesamtwinkel von 60° abdecken, somit -30°, 0° und +30°, während sich bei einem Winkel von 45° ein Gesamtwinkel von 90° abdecken lässt, mit Anordnungen von Aufnahme zu Schwenkelement von -45°, 0°, +45°.

Bezogen auf Endstellungen des Schwenkelements, konkret einer ersten Schwenkendstellung des Schwenkelements, die beispielsweise einer Öffnungsposition des Werkzeugs entspricht und der anderen Schwenkstellung des Schwenkelements, die beispielsweise einer Schließposition des Werkzeugs entspricht, lassen sich durch die erfindungsgemäße Ausgestaltung der Schwenkvorrichtung unterschiedliche Grundstellungen des Werkzeugs aufgrund der unterschiedlichen möglichen Anordnung der Aufnahme bezüglich des jeweiligen Schwenkelements verwirklichen. Dies erhöht die universelle Einsetzbarkeit sowohl der Schwenkvorrichtung als auch des von dieser aufgenommenen Werkzeugs bzw. aufgenommenen weiteren Schwenkeinrichtung erheblich.

Insbesondere ist die Schwenkvorrichtung derart ausgebildet, dass die Aufnahme das jeweilige Schwenkelement im Bereich von stirnseitigen Ebenen des Schwenkelements, die parallel zur Schwenkachse der Ausgangswelle angeordnet sind, kontaktiert. Somit ergibt sich eine Bewegung, bei der das Werkzeug oder eine von der Schwenkvorrichtung aufgenommene Schwenkvorrichtung beim Schwenken des jeweiligen Schwenkelements in einer Ebene, die parallel zur Schwenkachse der Ausgangswelle angeordnet ist, bezüglich der Schwenkvorrichtung bewegt wird. Dies stellt eine einfache Zuordnung der üblicherweise in einem Roboterarm gehaltener Schwenkvorrichtung und der Bewegung des in der Schwenkvorrichtung gelagerten Werkzeugs bzw. in der Schwenkvorrichtung gelagerten weiteren Schwenkvorrichtung dar.

Besonders einfach erfolgt die Befestigung der Aufnahme bzw. Aufnahmeplatte an dem Schwenkelement bzw. den Schwenkelementen dadurch, dass Gewindebohrungen die stirnseitigen Ebenen des jeweiligen Schwenkelements durchsetzen und die Aufnahme mit Löchern zur Aufnahme von in die Gewindebohrungen einschraubbaren Schrauben versehen ist.

Mit der Aufnahme ist vorzugsweise ein Werkzeug, insbesondere eine Schweißzange, ein Prägewerkzeug, ein Clinchwerkzeug oder ein Stiftziehwerkzeug, insbesondere zur Verwendung im Karosseriebau der Kfz-Industrie verbindbar. Die Verbindung erfolgt insbesondere durch Verschrauben von Werkzeug und Aufnahme. Alternativ kann mit der Aufnahme eine Schwenkvorrichtung für ein Werkzeug verbindbar, insbesondere verschraubbar sein.

Hinsichtlich der Antriebstechnik der Schwenkvorrichtung wird es als besonders vorteilhaft angesehen, wenn der Antrieb einen Elektromotor, insbesondere einen Schrittmotor oder Brushless-Motor aufweist. Es ist somit keine Antriebstechnik vorgesehen, bei der ein Kniehebel verwendet wird, der in einer Endstellung des Schwenkarms sich in einer Übertotpunktlage befindet. Vielmehr positioniert der Elektromotor den jeweiligen Schwenkhebel in der gewünschten Stellung. Mittels des Elektromotors, insbesondere Schrittmotors, lässt sich der jeweilige Schwenkhebel nicht nur hin und her verschwenken. Es ist durchaus möglich, den Schwenkhebel über einen Winkel, der größer ist als 360°, zu schwenken.

Unter dem Aspekt der Antriebstechnik wird es ferner als besonders vorteilhaft angesehen, wenn die Schwenkvorrichtung ein Getriebe, vorzugsweise ein Schneckengetriebe, insbesondere ein Schneckengetriebe mit vorgelagertem Zwischengetriebe aufweist, wobei die Ausgangswelle mittels des Elektromotors über das Getriebe antreibbar ist. Hierdurch lässt sich eine große Untersetzung der Drehzahl des Elektromotors zur Erreichung einer winkelpräzisen Verschwenkung des Schwenkelements erzielen.

Weitere Merkmale der Erfindung sind in den Unteransprüchen, der Beschreibung der Figuren sowie in den Figuren selbst dargestellt, wobei bemerkt wird, dass alle Einzelmerkmale und alle Kombinationen von Einzelmerkmalen erfindungswesentlich sind.

In den Figuren ist die Erfindung anhand mehrerer bevorzugter Ausführungsbeispiele veranschaulicht, ohne auf die beschriebenen Ausführungsformen beschränkt zu sein.

Es zeigt:
- Fig. 1: ein erstes Ausführungsbeispiel einer Schwenkvorrichtung, in einer räumlichen Darstellung,
- Fig. 2: einen Längsmittelschnitt durch die in Fig. 1 gezeigte Schwenkvorrichtung,
- Fig. 3 bis 8: für ein Kopfteil der in Fig. 1 gezeigten Schwenkvorrichtung das Demontieren und Montieren einer Aufnahme mit zwei mit einer Ausgangswelle der Schwenkvorrichtung verbundenen Schwenkelementen, die als Schwenkarme ausgebildet sind,
- Fig. 9: die Schwenkvorrichtung, veranschaulicht für den Bereich des Kopfteils der Schwenkvorrichtung, in einer räumlichen Darstellung,
- Fig. 10: eine vergrößerte Darstellung des in Fig. 9 umrandeten Bereichs,
- Fig. 11: ein zweites Ausführungsbeispiel der Schwenkvorrichtung, in einer räumlichen Darstellung,
- Fig. 12: ein drittes Ausführungsbeispiel der Schwenkvorrichtung, die eine weitere Schwenkvorrichtung aufnimmt, in einer räumlichen Darstellung,
- Fig. 13: ein viertes Ausführungsbeispiel der Schwenkvorrichtung, in einer räumlichen Darstellung,
- Fig. 14: für das Ausführungsbeispiel nach Fig. 13 das dort verwendete Schwenkelement mit mit dieser verbundener Aufnahme, veranschaulicht in unteren Verbindungsstellungen von Aufnahme und Schwenkelement,
- Fig. 15: die Anordnung gemäß Fig. 14 in einer Ansicht in Richtung einer Ausgangswelle der Schwenkvorrichtung, die das Schwenkelement aufnimmt,
- Fig. 16: ein fünftes Ausführungsbeispiel der Schwenkvorrichtung in einer räumlichen Darstellung,
- Fig. 17: in einer Schnittdarstellung das Zusammenwirkens der Abschnitte von Aufnahme und jeweiligem Schwenkelement.

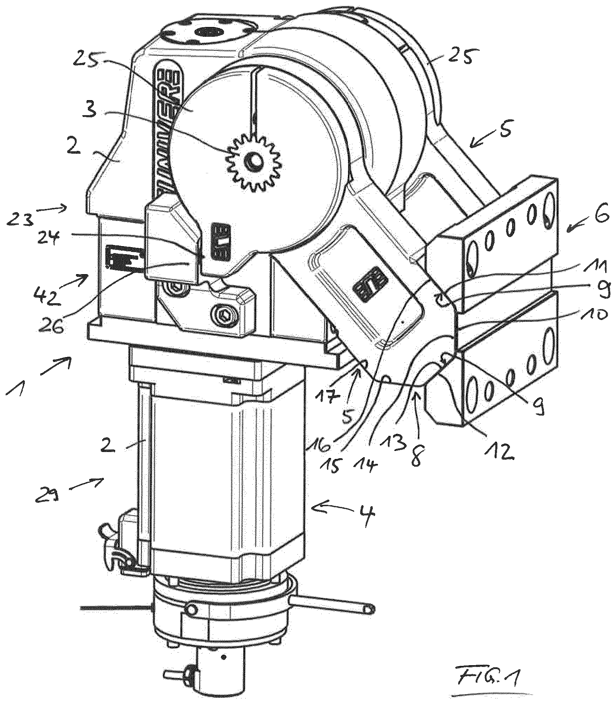

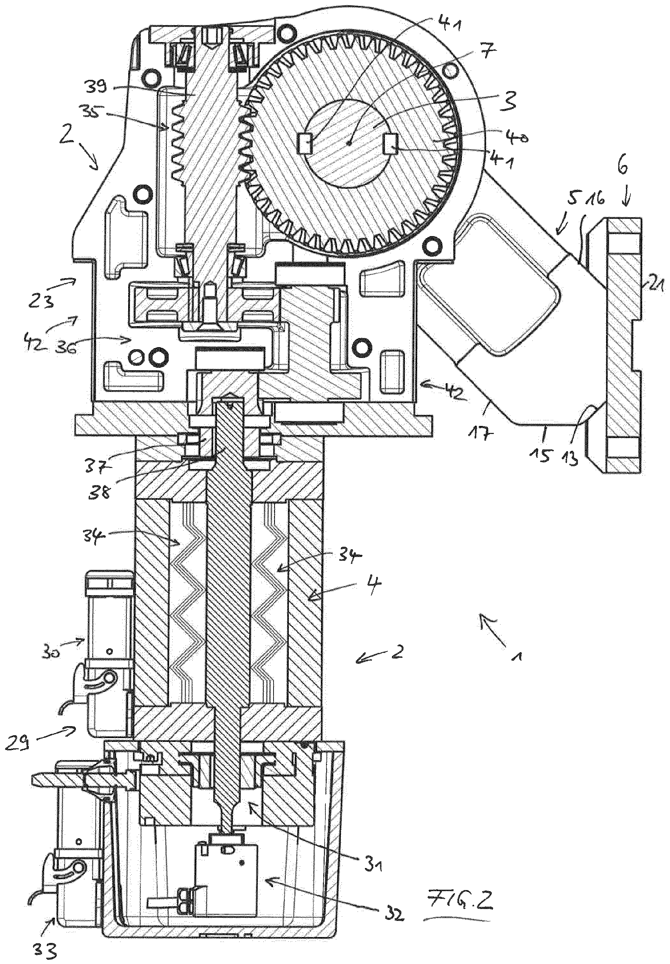

Das in den Fig. 1 und 2 veranschaulichte erste Ausführungsbeispiel zeigt eine Schwenkvorrichtung 1, mit einem Gehäuse 2, einer im Gehäuse 2 gelagerten und beidseitig aus diesem herausgeführten Ausgangswelle 3, einem im Gehäuse 2 angeordneten Antrieb 4 zum Schwenken der Ausgangswelle 3, zwei mit der Ausgangswelle 3 in deren aus dem Gehäuse 2 herausgeführten Bereich drehfest verbundenen Schwenkelementen 5 sowie mit einer in den Schwenkelementen 5 gelagerten und mit diesen verbundenen Aufnahme 6, wobei die Aufnahme 6 in unterschiedlichen Winkelstellungen parallel zur Drehachse 7 der Ausgangswelle 3 anordenbar ist.

Die Aufnahme 6 ist hierbei als Aufnahmeplatte ausgebildet. Die beiden Schwenkelemente 5 bilden separate Bauteile. Mit dem jeweils aus dem Gehäuse 2 herausgeführten Bereich der Ausgangswelle 3 ist eines der Schwenkelemente 5, die jeweils als Schwenkarm ausgebildet sind, drehfest verbunden, bei gleicher Winkelausrichtung der beiden Schwenkelemente 5. Die Schwenkelemente 5 sind bezüglich der Ausgangswelle 3 axial festgelegt. Die Aufnahme 6 ist in den beiden Schwenkelementen 5 gelagert und mit diesen verbunden. Die Schwenkelemente 5 sind identisch ausgebildet. Das jeweilige Schwenkelement 5 weist ein Aufnahmeprofil 8 für die Aufnahme 6 und die Aufnahme 6 ein Gegenprofil 9, das mit dem Aufnahmeprofil 8 korrespondiert, auf. Das Aufnahmeprofil 8 und das Gegenprofil 9 sind derart gestaltet, dass diese Profile in unterschiedlichen Stellungen von Aufnahme 6 und Schwenkelement 5 zueinander anordenbar sind.

Die Aufnahme 6 ist in beiden Schwenkelementen 5 gelagert und mit diesen verbunden. Beide Schwenkelemente 5 weisen dasselbe Aufnahmeprofil 8 für die Aufnahme 6 auf.

Die Aufnahme 6 weist einen zentralen Abschnitt 10 in einer ersten Ebene sowie zwei auf abgewandten Seiten dieses Abschnitts 10 angeordnete seitliche Abschnitte 11, 12, deren Ebenen unter identischen Winkeln zur ersten Ebene angeordnet sind, auf. Ferner weist das jeweilige Schwenkelement 5 einen zentralen Abschnitt 13 und zwei innere seitliche Abschnitte 14, 15, die entsprechend den Abschnitten der Aufnahme 6 ausgeführt und angeordnet sind, auf. Schließlich weist das jeweilige Schwenkelement 5 zwei äußere seitliche Abschnitte 16, 17 auf, die auf den dem zentralen Abschnitt 13 des jeweiligen Schwenkelements 5 abgewandten Seiten der beiden inneren seitlichen Abschnitte 14, 15 angeordnet sind, wobei Ebenen der beiden äußeren seitlichen Abschnitte 16, 17 unter identischen Winkeln zu den Ebenen der inneren seitlichen Abschnitte 14, 15 angeordnet sind. Diese Winkel entsprechen den Winkeln der Ebenen zwischen den inneren seitlichen Abschnitten 14, 15 und dem zentralen Abschnitt 13 des jeweiligen Schwenkelements 5. Konkret schließen bei der Aufnahme 6 deren seitliche Abschnitte 11, 12 bezüglich deren Ebenen einen Winkel von 45° mit der Ebene des zentralen Abschnitts 10 der Aufnahme 6 ein. Ferner schließen bei dem jeweiligen Schwenkelement 5 deren innere seitliche Abschnitte 14, 15 bezüglich deren Ebenen einen Winkel von 45° mit der Ebene des zentralen Abschnitts 13 des jeweiligen Schwenkelements 5 ein und es schließen bei dem jeweiligen Schwenkelement 5 deren äußere seitliche Abschnitte 16, 17 bezüglich deren Ebenen einen Winkel von 45° mit der Ebene des zugewandten inneren seitlichen Abschnitts 14, 15 ein.

Die Aufnahme 6 kontaktiert das jeweilige Schwenkelement 5 im Bereich von stirnseitigen Ebenen des Schwenkelements 5, die parallel zur Schwenkachse 7 der Ausgangswelle 3 angeordnet sind.

Gewindebohrungen 18 durchsetzen die stirnseitigen Ebenen des jeweiligen Schwenkelements 5, die durch die Abschnitte 13 bis 17 gebildet sind. Die Aufnahme 6 ist mit Löchern 19 im Bereich der den Abschnitten 10 bis 12 zugeordneten Ebenen versehen, zum Aufnehmen von in die Gewindebohrungen 18 einschraubbaren Schrauben 20. Konkret weist die Aufnahmeplatte 6 vier Löcher 19 zur Aufnahme der Schrauben 20 auf. Diese Löcher 19 sind mit deren Längsachsen unter einem Winkel von 45° zu einer Ebene 21 der Aufnahmeplatte 6 angeordnet, wobei diese Ebene 21 den Schwenkelementen 5 abgewandt ist. Diese Ebene 21 ist mit sechs Gewindebohrungen 22 versehen. Im Bereich dieser Ebene 21 und der Gewindebohrungen 22 erfolgt die Lagerung und Befestigung eines von der Schwenkvorrichtung 1 gehaltenen Werkzeugs oder einer von der Schwenkvorrichtung 1 gehaltenen weiteren Schwenkvorrichtung. Diese werden miteinander verschraubt. Bei dem jeweiligen Werkzeug handelt es sich vorzugsweise um ein solches, das im Karosseriebau der Kfz-Industrie Verwendung findet, wie eine Spannvorrichtung, eine Schweißzange, ein Prägewerkzeug, ein Clinchwerkzeug oder ein Stiftziehzylinder.

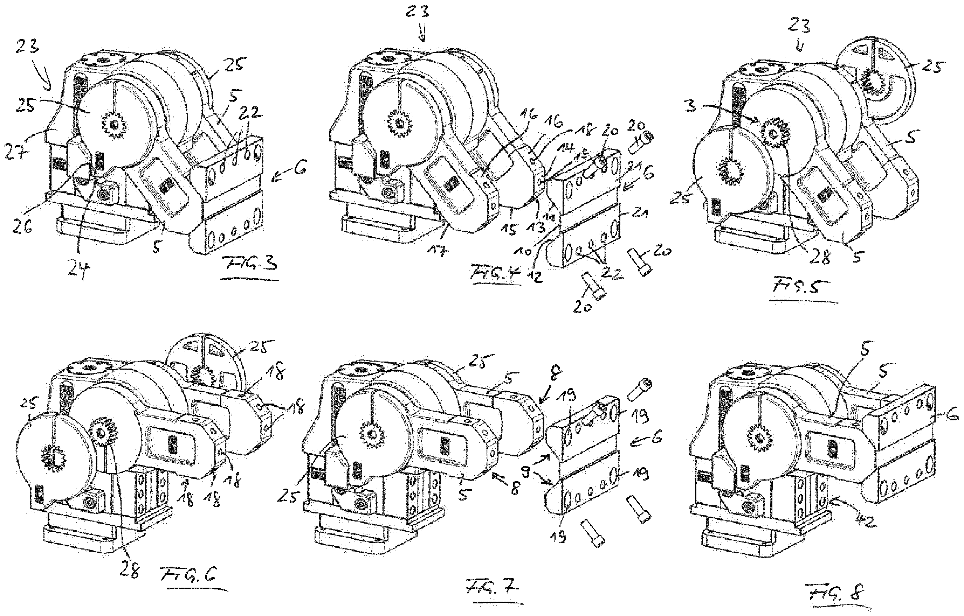

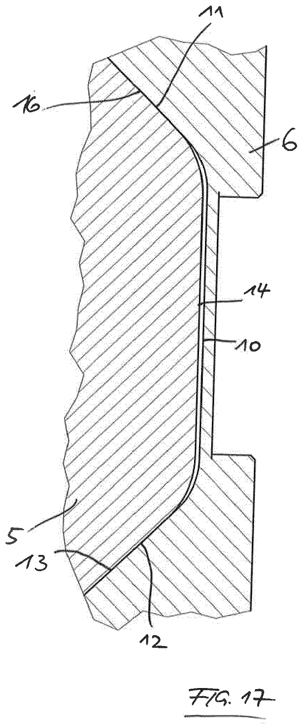

Die Fig. 3 bis 8 zeigen, betreffend einen Teilbereich der Schwenkvorrichtung 1, konkret ein Kopfteil 23 der Schwenkvorrichtung 1, die Demontage der Aufnahme 6 bezüglich der beiden Schwenkelemente 5 sowie die anschließende Montage der selben Aufnahme 6 nach veränderter Winkelstellung der beiden Schwenkelemente 5. Fig. 3 zeigt die beiden Schwenkelemente 5 in einer Endstellung, in der diese unter einem Winkel von 45° zu einer durch die Drehachse 7 der Ausgangswelle 3 gehenden horizontalen Ebene nach unten geschwenkt sind. In dieser Endstellung kontaktieren Bezugsauflagen 24 von zwei auf die Ausgangswelle 3 aufgesteckten Scheiben 25 zwei Anschläge 26 eines Bestandteil des Gehäuses 2 bildenden Gehäuseabschnitts 27 des Kopfteils 23. In dieser Stellung der beiden Schwenkelemente 5 ist die Aufnahme 6, konkret die Ebene 21 der Aufnahmeplatte 6 in einer vertikalen Ebene positioniert. Hierbei kontaktiert der seitliche Abschnitt 11 der Aufnahme 6 den äußeren seitlichen Abschnitt 16 des jeweiligen Schwenkelements 5 und der seitliche Abschnitt 12 der Aufnahme 6 den zentralen Abschnitt 13 des jeweiligen Schwenkelements 5. Der zentrale Abschnitt 10 der Aufnahme 6 ist, wie er der Darstellung der Figur 17 zu entnehmen ist, in geringem Abstand zu dem diesem zugeordneten inneren seitlichen Abschnitt 14 des jeweiligen Schwenkelements 5 angeordnet, um eine kinematisch überbestimmte Lagerung der Aufnahme 6 in dem jeweiligen Schwenkelement 5 zu vermeiden.

Ausgehend von dieser Stellung werden, wie es zur Fig. 4 veranschaulicht ist, die vier Schrauben 20 mittels derer die Aufnahme 6 mit den beiden Schwenkelementen 5 verbunden ist, gelöst und dann auch die beiden Scheiben 25 bezüglich der Ausgangswelle 3 gelöst und abgezogen, wie es in Fig. 5 veranschaulicht ist. Dann werden die beiden Schwenkelemente 5 durch Schwenken der Ausgangswelle 3 um 45°, entgegen dem Uhrzeigersinn, geschwenkt, sodass die Schwenkelemente 5 nunmehr in einer horizontalen Ebene positioniert sind. Dies ist in Fig. 6 gezeigt. Anschließend werden die beiden Scheiben 25 wieder auf die Zahnabschnitte der Ausgangswelle 3 gesteckt, bei Kontaktierung von jeweiliger Bezugsauflage 24 und Anschlag 26, wie es in Fig. 7 gezeigt ist. Anschließend wird die Aufnahme 6 mittels der vier Schrauben 20 wieder mit den Enden der Schwenkelemente 5 verschraubt, wobei nun, im Gegensatz zum Ausgangszustand, bei dem die Aufnahme 6 mit den Abschnitten 11 und 12 die Abschnitte. 16 und 13 des jeweiligen Schwenkelements 5 kontaktiert hat, nunmehr die Abschnitte 11 und 12 der Aufnahme 6 die Abschnitte 14 und 15 des jeweiligen Schwenkelements 5 kontaktieren. Dieser Zustand ist in Fig. 8 gezeigt.

Eine altnative, dritte Position von Aufnahme 6 und Schwenkelementen 5 wäre aufgrund der vorgegebenen Ausbildung der Abschnitte 10 bis 17 dahingehend möglich, dass die Abschnitte 11 und 12 der Aufnahme 6 die Abschnitte 13 und 17 des jeweiligen Schwenkelements 5 kontaktieren.

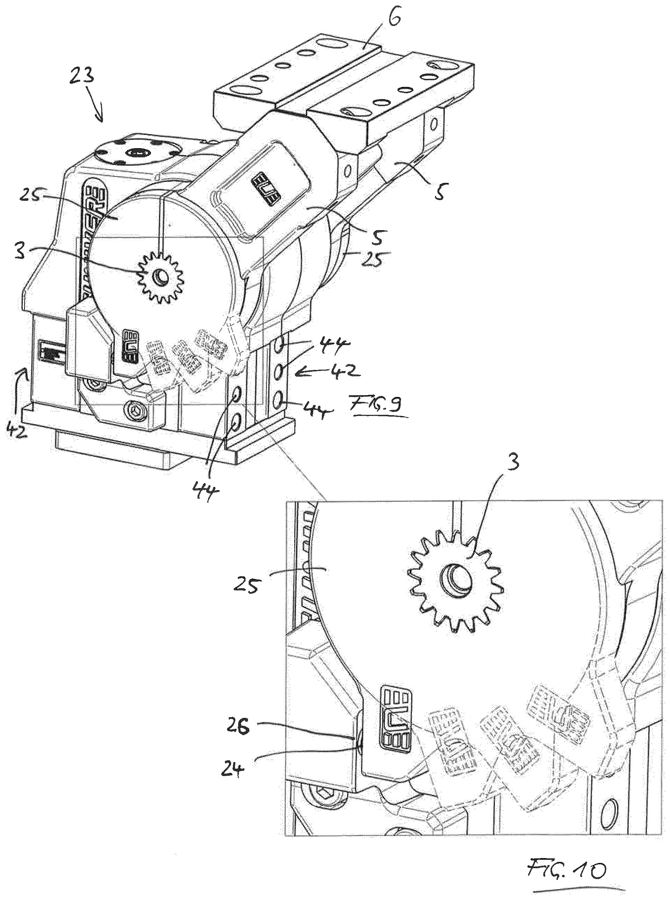

Wie insbesondere der Darstellung der Fig. 9 und 10 zu entnehmen ist, definiert der der jeweiligen Scheibe 25 und damit dem jeweiligen Schwenkelement 5 zugeordnete Anschlag 26 bei Kontakt mit der zugeordneten Bezugsauflage 24 des Kopfteils 23 eine Schwenkendposition des Schwenkelements 5. Bei dieser Schwenkendposition handelt es sich beispielsweise um eine Öffnungsstellung des Werkzeugs in die die Schwenkelemente 6 mittels des Antriebs 4 verfahren werden. Diese Anschlagstellung lässt sich durch unterschiedliches winkelbezogenes Aufstecken der Scheiben 25 auf die Zahnabschnitte 28 der Ausgangswelle 3 ändern, wie es in den Fig. 9 und 10 durch die unterschiedlichen, gestrichelt dargestellten Positionen der Scheiben 25 veranschaulicht ist.

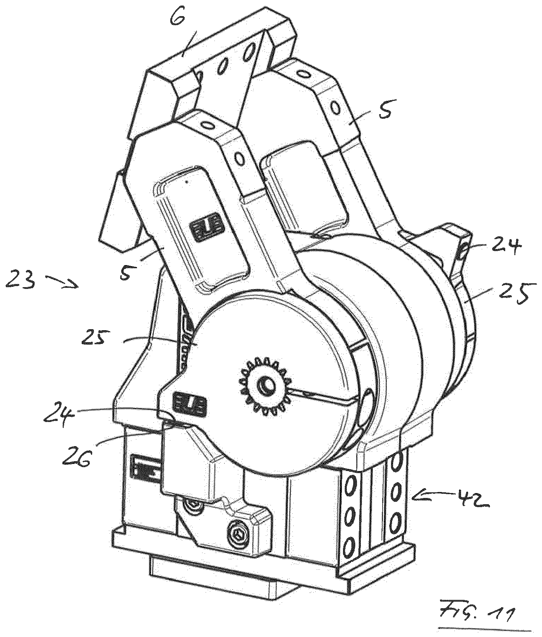

Fig. 11 zeigt bei anderen Orientierung der jeweiligen Scheibe 25, bei der die anderen Hauptebene der Scheibe 25 dem Schwenkelement 5 zugewandt ist, die Variante, bei der die jeweilige Scheibe 25 eine Anschlagsposition in gegenüber dem Ausführungsbeispiel nach Fig. 1 entgegengesetzten Schwenkrichtung des jeweiligen Schwenkelements 5 definiert. Hierbei handelt es sich insbesondere um eine Anschlagstellung, die der Schließstellung des Werkzeugs entspricht. Gezeigt ist, dass die Bezugsauflage 24 der jeweiligen Scheibe 25 mit einem anderen Anschlag 26 des Kopfteils 23 zusammenwirkt. Bei der anderen Scheibe 25 ist deren Position gemäß dem Ausführungsbeispiel nach der Fig. 1 beibehalten, sodass bei dem Ausführungsbeispiel nach Fig. 11 die eine Scheibe 25 die Schließstellung und die andere Scheibe 25 die Öffnungsstellung begrenzt.

In der Fig. 2 ist, betreffend das erste Ausführungsbeispiel gemäß Fig. 1, der Aufbau der Schwenkvorrichtung 1 veranschaulicht.

Die Schwenkvorrichtung 1 weist das Kopfteil 23 und ein Antriebsteil 29 auf. Das Antriebsteil 29 weist einen Gehäuseabschnitt 30 und den von diesem aufgenommenen Antrieb 4, bei dem es sich um den Elektromotor, konkret Schrittmotor handelt, auf. Ferner weist das Antriebsteil 29 Anschlüsse 30 für den Schrittmotor, eine Bremse 31, einen Encoder 32 und Anschlüsse 33 für Bremse/Encoder auf. Der Encoder 32 ist ein selbst angetriebener Mehrbereichsencoder, womit keine Versorgung mittels einer Pufferbatterie erforderlich ist. Mit der Bezugsziffer 34 ist die elektrische Wicklung des Elektromotors bezeichnet.

In dem Gehäuseabschnitt 27 des Kopfteils 23 ist ein Schneckengetriebe 35 und ein Zwischengetriebe 36 gelagert. Das Kopfteil 23 weist im Bereich seines dem Antriebsteil 29 zugewandten Endes eine Welle 37 auf, die eine Ausnehmung zur drehfesten Aufnahme einer Rotorwelle 38 des Schrittmotors aufweist. Beim Betätigen des Schrittmotors wird die Rotorwelle 38 über einen definierten Winkel gedreht und dreht entsprechend die Welle 37. Diese ist Bestandteil eines als Stirnradgetriebe ausgebildeten Zwischengetriebes 36, das ausgangsseitig drehfest mit einer im Gehäuseabschnitt 27 gelagerten Schneckenwelle 39 des Schneckengetriebes 35 zusammenwirkt. Die Schneckenwelle 39 kämmt mit einem Schneckenrad 40 des

Schneckengetriebes 35. Das Schneckenrad 40 ist in der Ausgangswelle 3 gelagert und über Passfedern 41 mit der Ausgangswelle 3 drehfest verbunden. Die Drehbewegung der Rotorwelle 38 wird somit drehzahluntersetzt und spielfrei auf die Ausgangswelle 3 übertragen und damit eine entsprechende Schwenkbewegung des Schwenkelements 5 bewirkt.

Diese beschriebene Gestaltung von Kopfteil 23 und Antriebsteil 29 der Schwenkvorrichtung 1 ist für alle Ausführungsformen der Schwenkvorrichtung 1 zutreffend.

Befestigt wird die Schwenkvorrichtung 1 im Bereich des Gehäuseabschnitts 27 des Kopfteils 23 mit einem Roboterarm. Hierzu ist der Gehäuseabschnitt 27 mit diversen Rücksprüngen 42 versehen, die jeweils eine Anlagefläche 43 für eine Aufnahme des Roboterarms bilden. Im Bereich dieser Anlagefläche 43 ist der Gehäuseabschnitt 27 mit diversen Gewindebohrungen 44 zur Aufnahme von Schrauben zwecks Verschrauben von Roboterarm und Schwenkvorrichtung 1 versehen.

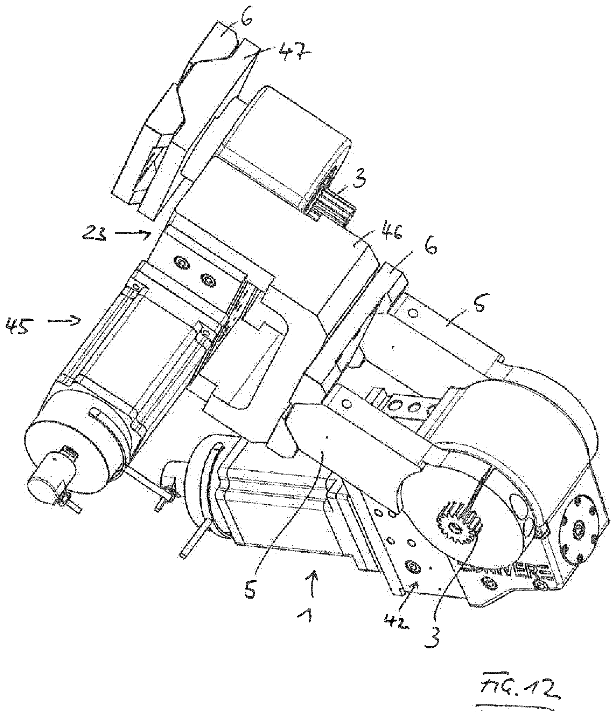

Das Ausführungsbeispiel gemäß der Fig. 12 veranschaulicht die schwenkbare Lagerung einer weiteren Schwenkvorrichtung 45 in der Schwenkvorrichtung 1. Beide Schwenkvorrichtungen sind identisch ausgebildet, bis auf den Bereich, der sich ausgangsseitig an die jeweilige Ausgangswelle 3 anschließt. Die Schwenkvorrichtung 1 ist einem Roboterarm gelagert. In der Aufnahme 6 der Schwenkvorrichtung 1 ist eine U-förmige Lagereinheit 46 gelagert und mit dieser Aufnahme 6 verschraubt. Die Lagereinheit 46 kontaktiert das Kopfteil 23 der weiteren Schwenkvorrichtung 45 auf abgewandten Anlageflächen 43 und ist dort mit dem Kopfteil 23 verschraubt. Auf der der Schwenkvorrichtung 1 abgewandten Seite weist die Ausgangswelle 3 der Schwenkvorrichtung 45 eine drehfest und im Übrigen axial zu dieser Ausgangswelle 3 festgelegte Lagerplatte 47 auf. Diese weist eine Profilierung auf, die komplementär der beschriebenen Profilierung der Aufnahme 6 ist, die gleichfalls bei der Schwenkvorrichtung 45 verwendet wird und mit der Lagerplatte 47 verschraubt ist. Die Aufnahme 6 der Schwenkvorrichtung 45 dient in beschriebener Art und Weise der verschraubten Aufnahme eines Werkzeugs.

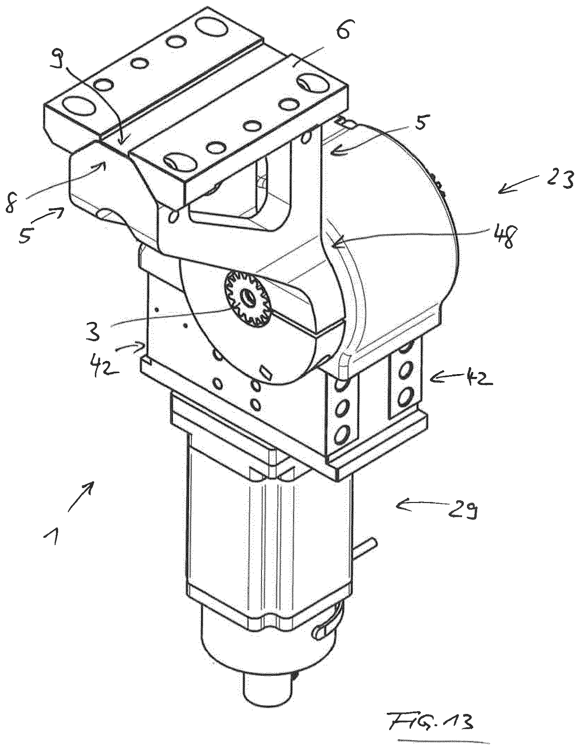

Das Ausführungsbeispiel nach der Fig. 13 unterscheidet sich von demjenigen nach der Fig. 1 dadurch, dass statt zweier beidseitig des Gehäuses 2 bzw. des Gehäuseabschnitts 37 angeordneter Schwenkelemente 5 eine zwei Schwenkelemente 5 aufweisende Schwenkelementeinheit 48 vorgesehen ist, die im Bereich eines Endes der Ausgangswelle 3 mit dieser drehfest und axial festgelegt verbunden ist. Die Schwenkelementeinheit 48 erweitert sich, von der Ausgangswelle 3 ausgehend, gabelförmig, wobei die beiden Schwenkelemente 5 im Bereich der freien Gabelenden jeweils mit einem Aufnahmeprofil 8 versehen sind, das mit dem Gegenprofil 9 der Aufnahme 6 zusammenwirkt. Die Aufnahme 6 bzw. Aufnahmeplatte ist somit beidendig in den Schwenkelementen 5 gestützt und dort mittels der vier Schrauben 20 befestigt, entsprechend der Befestigung beim Ausführungsbeispiel nach der Fig. 1.

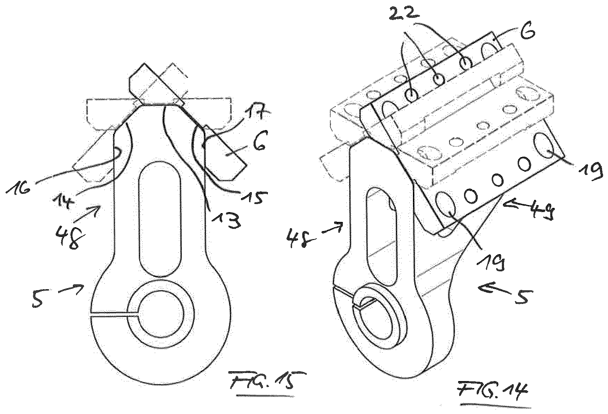

Die Fig. 14 und 15 veranschaulichen für das Ausführungsbeispiel nach Fig. 13 die drei unterschiedlichen möglichen Befestigungspositionen der Aufnahme 6 bezüglich der Gabelabschnitte 48, 49 des Schwenkelements 5.

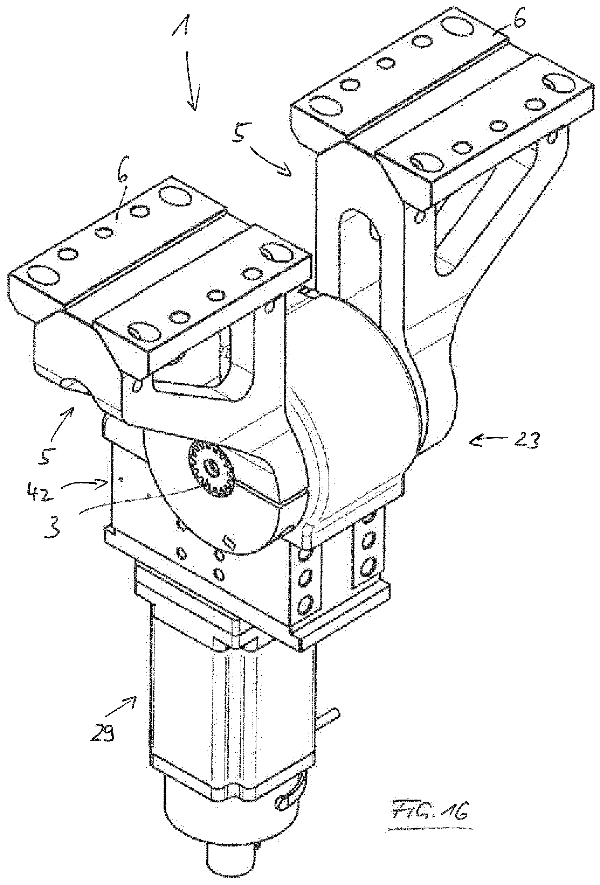

Das Ausführungsbeispiel gemäß der Fig. 16 unterscheidet sich von demjenigen nach den Fig. 13 bis 15 nur dadurch, dass nicht nur mit dem einen aus dem Gehäuseabschnitt 27 des Gehäuses 2 herausgeführten Bereich der Ausgangswelle 3 das Schwenkelement 5 verbunden ist, sondern ein entsprechendes Schwenkelement auch mit dem anderen herausgeführten Ende der Ausgangswelle 3. Hierbei ist die Orientierung der beiden Schwenkelemente 5 identisch, sodass in den mit den beiden Schwenkelementen 5 verbundenen beiden Aufnahmen 6 grundsätzlich ein gemeinsames, relativ großes und durchaus auch sehr schweres Werkzeug gelagert werden kann, indem es in beschriebener Art und Weise mit den Aufnahmen 6 befestigt, somit verschraubt wird.

### Bezugszeichenliste

- 1: Schwenkvorrichtung
- 2: Gehäuse
- 3: Ausgangswelle
- 4: Antrieb
- 5: Schwenkelement
- 6: Aufnahme
- 7: Drehachse
- 8: Aufnahmeprofil
- 9: Gegenprofil
- 10: zentraler Abschnitt
- 11: seitlicher Abschnitt
- 12: seitlicher Abschnitt
- 13: zentraler Abschnitt
- 14: innerer seitlicher Abschnitt
- 15: innerer seitlicher Abschnitt
- 16: äußerer seitlicher Abschnitt
- 17: äußerer seitlicher Abschnitt
- 18: Gewindebohrung
- 19: Loch
- 20: Schraube
- 21: Ebene
- 22: Gewindebohrung
- 23: Kopfteil
- 24: Bezugsauflage
- 25: Scheibe
- 26: Anschlag
- 27: Gehäuseabschnitt
- 28: Zahnabschnitt
- 29: Antriebsteil
- 30: Anschluss
- 31: Bremse
- 32: Encoder
- 33: Anschluss
- 34: Wicklung
- 35: Schneckengetriebe
- 36: Zwischengetriebe
- 37: Welle
- 38: Rotorwelle
- 39: Schneckenwelle
- 40: Schneckenrad
- 41: Passfeder
- 42: Rücksprung
- 43: Anlagefläche
- 44: Gewindebohrung
- 45: weitere Schwenkvorrichtung
- 46: Lagereinheit
- 47: Lagerplatte
- 48: Schwenkelementeinheit

## Patentansprüche

1. Schwenkvorrichtung (1), mit einem Gehäuse (2), einer im Gehäuse (2) gelagerten und aus diesem herausgeführten Ausgangswelle (3), einem im Gehäuse (2) angeordneten Antrieb (4) zum Schwenken der Ausgangswelle (3), einem mit der Ausgangswelle (3) in deren aus dem Gehäuse (2) herausgeführten Bereich drehfest verbundenen Schwenkelement (5), sowie mit einer in dem Schwenkelement (5) gelagerten und mit diesem verbundenen Aufnahme (6), wobei die Aufnahme (6) in unterschiedlichen Winkelstellungen anordenbar ist, wobei das Schwenkelement (5) ein Aufnahmeprofil (8) für die Aufnahme (6) und die Aufnahme (6) ein Gegenprofil (9), das mit dem Aufnahmeprofil (8) korrespondiert, aufweist, wobei das Aufnahmeprofil (8) und das Gegenprofil (9) derart gestaltet sind, dass diese Profile (8, 9) in unterschiedlichen Stellungen von Aufnahme (6) und Schwenkelement (5) zueinander anordenbar sind, **dadurch gekennzeichnet, dass** die Aufnahme (6) einen zentralen Abschnitt (10) in einer ersten Ebene sowie zwei auf abgewandten Seiten dieses Abschnitts (10) angeordnete seitliche Abschnitte (11, 12), deren Ebenen unter identischen Winkeln zur ersten Ebene angeordnet sind, aufweist, ferner das jeweilige Schwenkelement (5) einen zentralen Abschnitt (13) und zwei innere seitliche Abschnitte (14, 15), die entsprechend den Abschnitten (10, 11, 12) der Aufnahme (6) ausgeführt und angeordnet sind, aufweist, ferner das jeweilige Schwenkelement (5) zwei äußere seitliche Abschnitte (16, 17) aufweist, die auf dem zentralen Abschnitt (13) des jeweiligen Schwenkelements (5) abgewandten Seiten der beiden inneren seitlichen Abschnitte (14, 15) angeordnet sind, wobei Ebenen der beiden äußeren seitlichen Abschnitte (16, 17) unter identischen Winkeln zu den Ebenen der inneren seitlichen Abschnitte (14, 15) angeordnet sind, wobei diese Winkel den Winkeln der Ebenen zwischen den inneren seitlichen Abschnitten (14, 15) und dem zentralen Abschnitt (13) des jeweiligen Schwenkelements (5) entsprechen.

2. Schwenkvorrichtung nach Anspruch 1, **dadurch gekennzeichnet, dass** die Aufnahme (6) als Aufnahmeplatte ausgebildet ist.

3. Schwenkvorrichtung nach Anspruch 1 oder 2, **dadurch gekennzeichnet, dass** die Aufnahme (6) in dem Schwenkelement (5) und einem weiteren Schwenkelement (5) gelagert und mit diesem verbunden ist, wobei beide Schwenkelemente (5, 5) dasselbe Aufnahmeprofil (8) für die Aufnahme (6) aufweisen.

4. Schwenkvorrichtung nach Anspruch 3, **dadurch gekennzeichnet, dass** die beiden Schwenkelemente (5, 5) Bestandteil einer gemeinsamen Schwenkelementeinheit bilden, wobei die Schwenkelementeinheit drehfest mit der Ausgangswelle (3) verbunden ist.

5. Schwenkvorrichtung nach Anspruch 3, **dadurch gekennzeichnet, dass** die beiden Schwenkelemente (5, 5) separate Bauteile bilden, wobei die Ausgangswelle (3) beidseitig des Gehäuses (2) aus diesem herausgeführt ist und mit dem jeweils aus dem Gehäuse (2) herausgeführten Bereich der Ausgangswelle (3) eines der Schwenkelemente (5, 5) drehfest verbunden ist, bei gleicher Winkelausrichtung der beiden Schwenkelemente (5, 5).

6. Schwenkvorrichtung nach einem der Ansprüche 1 bis 5, **dadurch gekennzeichnet, dass** das jeweilige Schwenkelement (5) als Schwenkarm ausgebildet ist.

7. Schwenkvorrichtung nach einem der Ansprüche 1 bis 6, **dadurch gekennzeichnet, dass** die Aufnahme (6) mittels Schrauben (20) mit dem jeweiligen Schwenkelement (5) verbunden ist.

8. Schwenkvorrichtung nach einem der Ansprüche 1 bis 7, **dadurch gekennzeichnet, dass** die Aufnahme (6) nur im Bereich deren seitlichen Abschnitten (11, 12) zwei korrespondierende Abschnitte (13, 14, 15, 16, 17) des jeweiligen Schwenkelements (5) kontaktiert.

9. Schwenkvorrichtung nach einem der Ansprüche 1 bis 8, **dadurch gekennzeichnet, dass** bei der Aufnahme (6) deren seitliche Abschnitte (11, 12) bezüglich deren Ebenen eine Winkel von 30° bis 45°, insbesondere von 45° mit der Ebene des zentralen Abschnitts (10) der Aufnahme (6) einschließen, ferner bei dem jeweiligen Schwenkelement (5) deren innere seitliche Abschnitte (14, 15) bezüglich deren Ebenen einen Winkel von 30° bis 45°, insbesondere von 45° mit der Ebene des zentralen Abschnitts (13) des jeweiligen Schwenkelements (5) einschließen, ferner bei dem jeweiligen Schwenkelement (5) deren äußere seitliche Abschnitte (16, 17) bezüglich deren Ebenen einen Winkel von 30° bis 45°, insbesondere von 45° mit der Ebene des zugewandten inneren seitlichen Abschnitts (14, 15) einschließen.

10. Schwenkvorrichtung nach einem der Ansprüche 1 bis 9, **dadurch gekennzeichnet, dass** die Aufnahme (6) das jeweilige Schwenkelement (5) im Bereich von stirnseitigen Ebenen des Schwenkelements (5), die parallel zur Schwenkachse (7) der Ausgangswelle (3) angeordnet sind, kontaktiert.

11. Schwenkvorrichtung nach Anspruch 3, **dadurch gekennzeichnet, dass** Gewindebohrungen (18) die stirnseitigen Ebenen des jeweiligen Schwenkelements (5) durchsetzen und die Aufnahme (6) mit Löchern (19) zur Aufnahme von in die Gewindebohrungen (18) einschraubbaren Schrauben (20) versehen ist.

12. Schwenkvorrichtung nach einem der Ansprüche 1 bis 11, **dadurch gekennzeichnet, dass** mit der Aufnahme (6) ein Werkzeug, insbesondere eine Schweißzange, ein Prägewerkzeug, ein Clinchwerkzeug oder ein Stiftziehwerkzeug, insbesondere zur Verwendung im Karosseriebau der Kfz-Industrie, verbindbar, insbesondere verschraubbar ist, oder mit der Aufnahme (6) eine Schwenkvorrichtung (45) für ein Werkzeug verbindbar, insbesondere verschraubbar ist.

13. Schwenkvorrichtung nach einem der Ansprüche 1 bis 12, **dadurch gekennzeichnet, dass** der Antrieb (4) einen Elektromotor, insbesondere einen Schrittmotor oder einen Brushless-Motor aufweist.

14. Schwenkvorrichtung nach Anspruch 13, **dadurch gekennzeichnet, dass** sie ein Getriebe (35, 36), vorzugsweise ein Schneckengetriebe (35), insbesondere eine Schneckengetriebe (35) mit vorgelagertem Zwischengetriebe (36) aufweist, wobei die Ausgangswelle (3) vom Elektromotor über das Getriebe antreibbar ist.

15. Schwenkvorrichtung nach einem der Ansprüche 1 bis 14, **dadurch gekennzeichnet, dass** die Ausgangswelle (3) der drehfesten Aufnahme einer Scheibe (25) mit Bezugsauflage (24) dient, wobei die Bezugsauflage (24) in einer definierten Endlage des Schwenkelements (5) einen mit dem Gehäuse (2) fest verbundenen Anschlag (26) kontaktiert.

## Claims

1. Swivelling device (1), comprising a housing (2), an output shaft (3) which is mounted in the housing (2) and is led out of same, a drive (4) arranged in the housing (2) for swivelling the output shaft (3), a swivelling element (5) which is connected for conjoint rotation to the output shaft (3) in the region thereof which is led out of the housing (2), and with a receptacle (6) which is mounted in the swivelling element (5) and is connected thereto, wherein the receptacle (6) can be arranged in different angular positions, wherein the swivelling element (5) has a receiving profile (8) for the receptacle (6), and the receptacle (6) has a mating profile (9) which corresponds to the receiving profile (8), wherein the receiving profile (8) and the mating profile (9) are configured in such a manner that said profiles (8, 9) can be arranged in different positions of the receptacle (6) and swivelling element (5) with respect to each other, **characterized in that** the receptacle (6) has a central portion (10) in a first plane and two lateral portions (11, 12) which are arranged on averted sides of said portion (10) and the planes of which are arranged at identical angles to the first plane, furthermore the respective swivelling element (5) has a central portion (13) and two inner lateral portions (14, 15) which are designed and arranged in a manner corresponding to the portions (10, 11, 12) of the receptacle (6), furthermore the respective swivelling element (5) has two outer lateral portions (16, 17) which are arranged on sides of the two inner lateral portions (14, 15), which sides are averted from the central portion (13) of the respective swivelling element (5), wherein planes of the two outer lateral portions (16, 17) are arranged at identical angles to the planes of the inner lateral portions (14, 15), wherein said angles correspond to the angles of the planes between the inner lateral portions (14, 15) and the central portion (13) of the respective swivelling element (5).

2. Swivelling device according to Claim 1, **characterized in that** the receptacle (6) is in the form of a receiving plate.

3. Swivelling device according to Claim 1 or 2, **characterized in that** the receptacle (6) is mounted in the swivelling element (5) and in a further swivelling element (5) and is connected thereto, wherein the two swivelling elements (5, 5) have the same receiving profile (8) for the receptacle (6).

4. Swivelling device according to Claim 3, **characterized in that** the two swivelling elements (5, 5) form part of a common swivelling element unit, wherein the swivelling element unit is connected for conjoint rotation to the output shaft (3) .

5. Swivelling device according to Claim 3, **characterized in that** the two swivelling elements (5, 5) form separate components, wherein the output shaft (3) is led out of the housing (2) on both sides thereof and is connected for conjoint rotation to the region, which is in each case led out of the housing (2), of the output shaft (3) of one of the swivelling elements (5, 5), with the same angular orientation of the two swivelling elements (5, 5).

6. Swivelling device according to one of Claims 1 to 5, **characterized in that** the respective swivelling element (5) is in the form of a swivelling arm.

7. Swivelling device according to one of Claims 1 to 6, **characterized in that** the receptacle (6) is connected to the respective swivelling element (5) by means of screws (20).

8. Swivelling device according to one of Claims 1 to 7, **characterized in that** the receptacle (6) makes contact only in the region of the lateral portions (11, 12) thereof with two corresponding portions (13, 14, 15, 16, 17) of the respective swivelling element (5).

9. Swivelling device according to one of Claims 1 to 8, **characterized in that**, in the case of the receptacle (6), the lateral portions (11, 12) thereof with respect to the planes thereof enclose an angle of 30° to 45°, in particular of 45° with the plane of the central portion (10) of the receptacle (6), furthermore, in the case of the respective swivelling element (5), the inner lateral portions (14, 15) thereof with respect to the planes thereof enclose an angle of 30° to 45°, in particular of 45° with the plane of the central portion (13) of the respective swivelling element (5), furthermore, in the case of the respective swivelling element (5), the outer lateral portions (16, 17) thereof with respect to the planes thereof enclose an angle of 30° to 45°, in particular of 45° with the plane of the facing inner lateral portion (14, 15).

10. Swivelling device according to one of Claims 1 to 9, **characterized in that** the receptacle (6) makes contact with the respective swivelling element (5) in the region of end-side planes of the swivelling element (5) that are arranged parallel to the swivel axis (7) of the output shaft (3).

11. Swivelling device according to Claim 3, **characterized in that** threaded bores (18) pass through the end-side planes of the respective swivelling element (5) and the receptacle (6) is provided with holes (19) for receiving screws (20) which can be screwed into the threaded bores (18).

12. Swivelling device according to one of Claims 1 to 11, **characterized in that** a tool, in particular welding tongues, a stamping tool, a clinching tool or a pin locating cylinder, in particular for use in body manufacturing in the motor vehicle industry, can be connected, in particular can be screwed, to the receptacle (6), or a swivelling device (45) for a tool can be connected, in particular can be screwed, to the receptacle (6).

13. Swivelling device according to one of Claims 1 to 12, **characterized in that** the drive (4) has an electric motor, in particular a stepping motor or a brushless motor.

14. Swivelling device according to Claim 13, **characterized in that** it has a gearing (35, 36), preferably a worm gearing (35), in particular a worm gearing (35) with an intermediate gearing (36) mounted upstream, wherein the output shaft (3) can be driven by the electric motor via the gearing.

15. Swivelling device according to one of Claims 1 to 14, **characterized in that** the output shaft (3) serves for receiving a disc (25) with a cover support (24) for conjoint rotation, wherein the cover support (24) makes contact with a stop (26), which is fixedly connected to the housing (2), in a defined end position of the swivelling element (5).

## Revendications

1. Dispositif de pivotement (1), comportant un boîtier (2), un arbre de sortie (3) monté dans le boîtier (2) et guidé hors de celui-ci, un entraînement (4) disposé dans le boîtier (2) pour le pivotement de l'arbre de sortie (3), un élément pivotant (5) relié de manière solidaire en rotation à l'arbre de sortie (3) dans sa région guidée hors du boîtier (2), ainsi qu'un logement (6) monté dans l'élément pivotant (5) et relié à celui-ci, le logement (6) pouvant être disposé dans différentes positions angulaires, l'élément pivotant (5) comprenant un profil de logement (8) pour le logement (6) et le logement (6) comprenant un profil conjugué (9) qui correspond au profil de logement (8), le profil de logement (8) et le profil conjugué (9) étant configurés de telle sorte que ces profils (8, 9) peuvent être disposés dans différentes positions du logement (6) et de l'élément pivotant (5) l'un par rapport à l'autre, **caractérisé en ce que** le logement (6) comprend une partie centrale (10) dans un premier plan ainsi que deux parties latérales (11, 12) disposées sur des côtés opposés de cette partie (10), parties latérales dont les plans sont disposés suivant des angles identiques par rapport au premier plan, en outre l'élément pivotant (5) respectif comprend une partie centrale (13) et deux parties latérales intérieures (14, 15) qui sont réalisées et disposées de manière correspondante aux parties (10, 11, 12) du logement (6), en outre l'élément pivotant (5) respectif comprend deux parties latérales extérieures (16, 17) qui sont disposées sur des côtés des deux parties latérales intérieures (14, 15) opposés à la partie centrale (13) de l'élément pivotant (5) respectif, les plans des deux parties latérales extérieures (16, 17) étant disposés suivant des angles identiques par rapport aux plans des parties latérales intérieures (14, 15), ces angles correspondant aux angles des plans entre les parties latérales intérieures (14, 15) et la partie centrale (13) de l'élément pivotant (5) respectif.

2. Dispositif de pivotement selon la revendication 1, **caractérisé en ce que** le logement (6) est réalisé sous forme de plaque de logement.

3. Dispositif de pivotement selon la revendication 1 ou 2, **caractérisé en ce que** le logement (6) est monté dans l'élément pivotant (5) et un autre élément pivotant (5) et est relié à celui-ci, les deux éléments pivotants (5, 5) comprenant le même profil de logement (8) pour le logement (6).

4. Dispositif de pivotement selon la revendication 3, **caractérisé en ce que** les deux éléments pivotants (5, 5) font partie d'une unité d'éléments pivotants commune, l'unité d'éléments pivotants étant reliée de manière solidaire en rotation à l'arbre de sortie (3).

5. Dispositif de pivotement selon la revendication 3, **caractérisé en ce que** les deux éléments pivotants (5, 5) forment des composants séparés, l'arbre de sortie (3) étant guidé hors du boîtier (2) des deux côtés de celui-ci et étant relié de manière solidaire en rotation à la région de l'arbre de sortie (3) de l'un des éléments pivotants (5, 5), laquelle région est guidée respectivement hors du boîtier (2), en cas d'orientation angulaire identique des deux éléments pivotants (5, 5).

6. Dispositif de pivotement selon l'une des revendications 1 à 5, **caractérisé en ce que** l'élément pivotant (5) respectif est réalisé sous forme de bras pivotant.

7. Dispositif de pivotement selon l'une des revendications 1 à 6, **caractérisé en ce que** le logement (6) est relié à l'élément pivotant (5) respectif au moyen de vis (20).

8. Dispositif de pivotement selon l'une des revendications 1 à 7, **caractérisé en ce que** le logement (6) vient en contact avec deux parties (13, 14, 15, 16, 17) correspondantes de l'élément pivotant (5) respectif seulement dans la région de ses parties latérales (11, 12) .

9. Dispositif de pivotement selon l'une des revendications 1 à 8, **caractérisé en ce que** les parties latérales (11, 12) du logement (6) forment, par rapport à leurs plans, un angle de 30° à 45°, en particulier de 45° avec le plan de la partie centrale (10) du logement (6), en outre les parties latérales intérieures (14, 15) de l'élément pivotant (5) respectif forment, par rapport à leurs plans, un angle de 30° à 45°, en particulier de 45° avec le plan de la partie centrale (13) de l'élément pivotant (5) respectif, en outre les parties latérales extérieures (16, 17) de l'élément pivotant (5) respectif forment, par rapport à leurs plans, un angle de 30° à 45°, en particulier de 45° avec le plan de la partie latérale intérieure (14, 15) en regard.

10. Dispositif de pivotement selon l'une des revendications 1 à 9, **caractérisé en ce que** le logement (6) vient en contact avec l'élément pivotant (5) respectif dans la région de plans frontaux de l'élément pivotant (5) qui sont disposés parallèlement à l'axe de pivotement (7) de l'arbre de sortie (3).

11. Dispositif de pivotement selon la revendication 3, **caractérisé en ce que** des alésages filetés (18) traversent les plans frontaux de l'élément pivotant (5) respectif et le logement (6) est doté de trous (19) pour le logement de vis (20) pouvant être vissées dans les alésages filetés (18).

12. Dispositif de pivotement selon l'une des revendications 1 à 11, **caractérisé en ce qu'**un outil, en particulier une pince porte-électrode, un outil d'estampage, un outil de clinchage ou un outil d'extraction de broche, en particulier destiné à être utilisé dans la fabrication de carrosseries de l'industrie automobile, peut être relié au logement (6), en particulier peut être vissé sur celui-ci, ou un dispositif de pivotement (45) pour un outil peut être relié au logement (6), en particulier peut être vissé sur celui-ci.

13. Dispositif de pivotement selon l'une des revendications 1 à 12, **caractérisé en ce que** l'entraînement (4) comprend un moteur électrique, en particulier un moteur pas à pas ou un moteur sans balais.

14. Dispositif de pivotement selon la revendication 13, **caractérisé en ce qu'**il comprend une transmission (35, 36), de préférence une transmission à vis sans fin (35), en particulier une transmission à vis sans fin (35) dotée d'une transmission intermédiaire (36) montée en amont, l'arbre de sortie (3) pouvant être entraîné par le moteur électrique par le biais de la transmission.

15. Dispositif de pivotement selon l'une des revendications 1 à 14, **caractérisé en ce que** l'arbre de sortie (3) sert à la réception de manière solidaire en rotation d'un disque (25) doté d'un support de référence (24), le support de référence (24) venant en contact avec une butée (26) reliée solidement au boîtier (2) dans une position finale définie de l'élément pivotant (5).
